# EUROPÄISCHE PATENTSCHRIFT

(11) **EP 2 454 075 B1**
(45) Veröffentlichungstag und Bekanntmachung des Hinweises auf die Patenterteilung: **26.02.2014**
(21) Anmeldenummer: 10734691.8
(22) Anmeldetag: 14.07.2010
(51) Int. Cl.: B29C 45/52

(54) **VORRICHTUNG ZUR HERSTELLUNG VON KUNSTSTOFF-FORMTEILEN UND DEREN VERWENDUNG**
DEVICE FOR PRODUCING PLASTIC MOLDED PARTS AND THE USE THEREOF
DISPOSITIF DE FABRICATION DE PIÈCES MOULÉES EN PLASTIQUE ET SON UTILISATION

(30) Priorität: 17.07.2009 DE 102009033681
(43) Veröffentlichungstag der Anmeldung: 23.05.2012
(73) Patentinhaber: Fraunhofer-Gesellschaft zur Förderung der angewandten Forschung e.V., 80686 München (DE)
(72) Erfinder: BERG, Lars Fredrik, 76133 Karlsruhe (DE); THOMA, Bernd, 76135 Karlsruhe (DE)
(74) Vertreter: Lenz, Steffen
(86) Internationale Anmeldenummer: PCT/EP2010/004291
(87) Internationale Veröffentlichungsnummer: WO 2011/006648

(56) Entgegenhaltungen:
- JP-A- 2003 340 892
- JP-U- 59 171 916
- US-A- 3 131 433
- US-A- 5 356 281

## Beschreibung

Die Erfindung betrifft eine Vorrichtung zur Herstellung von Kunststoff-Formteilen, mit einem Extruder und einem stromab einer Austrittsöffnung des Extruders angeordneten Formwerkzeug, wobei in dem Extruder eine Schnecke derart geführt ist, daß sie einerseits drehbar, andererseits axial verlagerbar ist, um in dem Extruder befindliche plastifizierte oder flüssige Polymere, Prepolymere und/oder Monomere in das Formwerkzeug zu überführen, wobei im Bereich des freien Endes der Schnecke eine Rückstromsperre angeordnet ist, wobei wenigstens ein gegen die innere Umfangswandung des Extruders wirkender Sperring der Rückstromsperre eine auf zumindest einen Teil seines Außenumfangs aufgebrachte Dichtung aufweist, welche den Sperring gegen die Umfangswandung des Extruders abdichtet. Die Erfindung bezieht sich ferner auf eine insbesondere für eine solche Vorrichtung vorgesehene Rückstromsperre zur Anordnung im Bereich des freien Endes der Schnecke eines Extruders, wobei die Rückstromsperre wenigstens einen gegen eine innere Umfangswand des Extruders wirkenden Sperring aufweist, welcher eine auf zumindest einen Teil seines Außenumfangs aufgebrachte Dichtung aufweist, sowie auf die Verwendung einer solchen Vorrichtung zur direkten Herstellung von Polymer-Formteilen.

Derartige Vorrichtungen sind insbesondere in Form von Spritzgießmaschinen für thermoplastische Kunststoffe bekannt. Dabei wird dem oft als "Spritzeinheit" bezeichneten Extruder ein üblicherweise in Granulatform vorliegendes Polymer, gegebenenfalls in Verbindung mit Zusatzstoffen, wie Füllstoffen, Verstärkungsfasern etc., aufgegeben und in dem Extruder plastifiziert. Zum Einspritzen des plastifizierten Polymers in das Formwerkzeug wird die Schnecke um einen Abstand nach vorne in Richtung der üblicherweise in Form einer Düse oder eines Düsenaggregates gebildeten Austrittsöffnung des Extruders axial verlagert, wobei im Bereich des freien Endes der Schnecke eine Rückstromsperre angeordnet sein kann, welche einen Rückstrom des plastifizierten Polymers während des Einspritzens weitestgehend zu verhindern und auf diese Weise für eine möglichst exakte und reproduzierbare Dosierung der erforderlichen Polymermenge zu gewährleisten. Bekannte Rückstromsperren weisen im allgemeinen einen gegen die innere Umfangswandung des Extruders anliegenden Sperring auf, welcher in der Regel für eine zufriedenstellende Verhinderung eines Rückstromes des plastifizierten, üblicherweise zäh viskosen Polymers entgegen des Vorschubs der Schnecke zurück in den Extruder sorgt.

In jüngerer Zeit werden Verfahren eingesetzt, bei welchen dem Extruder nicht notwendigerweise nur plastifizierte Polymere aufgegeben werden, sondern - alternativ oder zusätzlich - flüssige Prepolymere, wie insbesondere Mono-, Di- oder Oligomere, welche - gegebenenfalls in Gegenwart eines Aktivators bzw. Initiators oder Katalysators - zu einer Polymerisation untereinander bzw. mit zusätzlich aufgegebenen Polymeren in der Lage sind. Ein solches Verfahren ist beispielsweise aus der EP 1 415 793 A1 bekannt. Der Vorteil eines solchen Verfahrens besteht insbesondere darin, daß aufgrund der sehr geringen Viskosität der eingesetzten Prepolymere eine Erhöhung des Anteils an Füllstoffen oder -fasern erreicht werden kann, weil letztere von den flüssigen Prepolymeren in einem höheren Maße infiltriert, benetzt bzw. durchtränkt werden als es bei üblicherweise zäh viskosen Polymerschmelzen der Fall ist. Als nachteilig hat es sich indes insbesondere im Falle der Herstellung von Formteilen mit relativ komplexer Geometrie, wie beispielsweise mit relativ kleinformatigen oder dünnen Formraumbereichen, in welchen die Polymere und/oder Prepolymere eingespritzt werden müssen, erwiesen, daß eine exakte und insbesondere reproduzierbare Dosierung der gewünschten Polymer- bzw. Prepolymermenge schwierig, wenn nicht gar unmöglich ist, was zu Materialinhomogenitäten in dem Formteil und einem damit verbundenen erhöhten Ausschuß führt.

Die US 2005/0233020 A1 beschreibt eine Rückstromsperre zur Anordnung am freien Ende eines Extruders einer gattungsgemäßen Vorrichtung zur Herstellung von Kunststoff-Formteilen. Die Rückstromsperre kann in diesem Fall einen Sperring aufweisen, der an seiner äußeren Umfangsfläche mit einer Umfangsnut ausgebildet ist, um einen aus zwei Ringhälften gebildeten Kolbenring aufzunehmen, welcher für eine Abdichtung des Sperrings gegenüber dem Extrudergehäuse sorgt, um einen Rückfluß von Schmelze während des Einspritzvorgangs weitgehend zu verhindern. Eine einwandfreie Dichtigkeit, wie sie insbesondere für relativ gering viskose bis flüssige, zu verarbeitende Harze und/oder für zu erzeugende Formteile mit verhältnismäßig komplexer Geometrie erforderlich wäre, läßt sich hierdurch indes nicht erzielen, da einerseits an den Stoßstellen des Kolbenrings bei dem während des Einspritzvorgangs herrschenden, sehr hohen Druck in dem stromab der Rückstromsperre gelegenen, auslaßseitigen Ende des Extruders gleichwohl die Gefahr eine Rückströmung der zu injizierenden Harzmischung in den Extruder besteht, andererseits besteht der Kolbenring offenbar ebenso wie die übrigen Elemente der Rückstromsperre aus Metall, so daß zwischen dem Kolbenring und dem Extruder notwendigerweise gewisse Toleranzen eingehalten werden müssen, um für notwendiger axiale Verlagerbarkeit des mit dem Kolbenring versehenen Sperrings der Rückstromsperre zu sorgen.

Die JP 05-042 568 A beschreibt eine weitere Rückstromsperre zur Anordnung am freien Ende der Extruderschnecke einer Spritzgießvorrichtung, wobei zur Abdichtung des Sperrings in diesem Fall eine außenseitige Beschichtung desselben vorgesehen ist. Die Beschichtung ist aus diamantähnlichen Kohlenstoffmodifikationen gebildet. Insoweit gilt für das sehr harte Dichtungsmaterial in Form von diamantartigem Kohlenstoff weitestgehend das oben zur US 2005/0233020 A1 gesagte.

Der US 5 356 281 A ist eine mit einer Rückstromsperre versehene Extruderschnecke einer Spritzgießmaschine zu entnehmen, wobei die Rückstromsperre an ihrem Außenumfang mit zwei jeweils in Nuten eingelegten Dichtringen ausgestattet ist, welche die Rückstromsperre gegen die Extruderwand abdichten sollen. Die Anordnung aus den beiden Dichtringen soll hierbei ein Verkanten der Rückstromsperre verhindern. Etwaige Dichtungsmaterialien sind nicht erwähnt.

Schließlich beschreibt die US 3 131 433 A eine Spritzgießmaschine mit einer Schnecke, welche mit einer Art "Rückstromsperre" aus einer Kombination eines verdickten Endstückes der Schnecke und einer stationär am Innenumfang der Extruderwand angeordneten Dichtung versehen ist, wobei als Dichtungsmaterial insbesondere gehärteter Federstahl erwähnt ist.

Der Erfindung liegt die Aufgabe zugrunde, der Rückstromsperre einer Vorrichtung zur Herstellung von Kunststoff-Formteilen der eingangs genannten Art eine praktisch vollständige Dichtigkeit zu verleihen, so daß sich ihr auch die Anwendung für sehr gering viskose bis flüssige Polymere, Prepolymere und/oder Monomere zur Herstellung von Polymer-Formteilen praktisch beliebiger Geometrie erschließt.

Erfindungsgemäß wird diese Aufgabe bei einer Vorrichtung sowie bei einer insbesondere für eine solche Vorrichtung geeignete Rückstromsperre der eingangs genannten Art dadurch gelöst, daß das verschleißfeste Dichtungsmaterial der Dichtung des Sperrings aus der Gruppe der Polyetherketone (PEK) und deren Derivate, der Polyaryletherketone (PAEK) und deren Derivate, der polyhalogenierten Polyolefine, der hochmolekularen Polyolefine mit einer Molmasse von wenigstens 100.000 g/Mol und der Polyamide (PA) einschließlich Copolymeren und Polymer-Blends mit denselben mit einer geringeren Härte als das Material der Umfangswandung des Extruders gewählt ist.

Durch die erfindungsgemäße Ausgestaltung werden Leckströmungen auch sowohl von besonders gering viskosen Polymerschmelzen als auch insbesondere von flüssigen Prepolymeren, wie Mono-, Di- oder Oligomeren, durch die Rückstromsperre hindurch entgegen dem Vorschub der Schnecke des Extruders bzw. der Spritzeinheit während des Einspritzvorgangs zuverlässig verhindert, so daß sowohl der erforderliche Einspritzdruck als auch die erforderliche Einspritzmenge an Polymer/Prepolymer exakt und reproduzierbar voreingestellt werden kann. Aufgrund dessen, daß die erfindungsgemäß vorgesehene Dichtung des Sperrings der Rückstromsperre stets mit der Innenwandung des Extruders in dichtendem Kontakt steht, besitzen die im Stand der Technik problematischen Parameter Schmelzviskosität und Einspritzgeschwindigkeit (bzw. hierdurch bewirkter Druck auf die einzuspritzende Menge an Polymer/Prepolymer) keinen Einfluß mehr auf die eingespritzte Menge an Polymer/Prepolymer, so daß letztere genau und reproduzierbar einstellbar ist und Inhomogenitäten oder gar Einschlüsse in dem erzeugten Kunststoff-Formteil aufgrund Schwankungen der Materialmenge zuverlässig vermieden werden. Folglich lassen sich auch sehr komplexe Formteile (z.B. solche mit extrem dünner Wandstärke oder mit längeren Fließwegen innerhalb des Formwerkzeugs) mit, sofern gewünscht, sehr hohem Anteil an Füllstoffe und/oder Verstärkungsfasern herstellen. Aufgrund der geringeren Härte des Dichtungsmaterials der Dichtung des Sperrings als das Material der Umfangswandung des Extruders, welche üblicherweise aus sowohl gegenüber chemischem Angriff als auch gegenüber relativ hohen Temperaturen, z.B. bis etwa 300°C, hoch inertem Stahl gefertigt ist, ergibt sich in jedem Fall eine einwandfreie Dichtigkeit der Rückstromsperre bei möglichst geringem Verschleiß der Extruderwand.

Die erfindungsgemäßen, für die Dichtung des Sperrings geeigneten Dichtungsmaterialien aus der Gruppe der Polyetherketone (PEK) und deren Derivate, der Polyaryletherketone (PAEK) und deren Derivate, der polyhalogenierten Polyolefine, insbesondere der polyfluorierten Polyolefine, der hochmolekularen Polyolefine mit einer Molmasse von wenigstens 100.000 g/Mol und der Polyamide (PA) einschließlich Copolymeren und Polymer-Blends mit denselben sind chemisch weitestgehend inert und besitzen sowohl eine hohe Verschleißfestigkeit als auch einen verhältnismäßig hohen Wärmeausdehnungskoeffizienten.

Ein weiterer Vorteil der erfindungsgemäßen Ausgestaltung besteht darin, daß sie einer herkömmlichen Spritzgießmaschine, deren Schnecke lediglich mit einer erfindungsgemäßen Rückstromsperre versehen werden muß, die Möglichkeit einer direkten Verarbeitung von gegebenenfalls mit bis zu einem hohen Füllgrad an Füllstoffen, Verstärkungsfasern oder dergleichen beaufschlagten, flüssigen Prepolymeren, gegebenenfalls in Verbindung mit plastifizierbaren bzw. thermoplastischen Polymeren zu Kunststoff-Formteilen eröffne, wobei eine solche Spritzgießmaschine aufgrund ihres immanent hohen Maßes an Automation kürzere Prozeßzyklen und folglich eine erhöhte Produkteffizienz gegenüber anderen reaktiven bekannten Verarbeitungsverfahren, wie beispielsweise Resin Transfer Moulding (RTM), Resin Injection Moulding (RIM) etc., ermöglicht.

In vorteilhafter Ausgestaltung kann vorgesehen sein, daß das Dichtungsmaterial der Dichtung des Sperrings einen Wärmeausdehnungskoeffizienten von wenigstens 30 x 10⁻⁶/K, insbesondere von wenigstens 35 x 10⁻⁶/K, vorzugsweise von wenigstens 40 x 10⁻⁶/K, aufweist, wobei der Wärmeausdehnungskoeffizient beispielsweise in einem bevorzugten Bereich zwischen etwa 40 x 10⁻⁶/K und etwa 150 x 10⁻⁶/K liegen kann. Mit "Wärmeausdehnungskoeffizient" ist im Rahmen der vorliegenden Offenbarung stets der lineare Ausdehnungskoeffizient α angesprochen, welcher angibt, um welche Längendifferenz bezogen auf die Gesamtlänge sich ein Festkörper bei einer Temperaturänderung von 1 K verändert.

In diesem Zusammenhang hat es sich insbesondere als vorteilhaft erwiesen, wenn die Dichtung des Sperrings unter umfänglichem Andruck an die Umfangswandung des Extruders montiert ist, so daß sie sich bei der Betriebstemperatur auszudehnen vermag und auf diese Weise eine äußerst sichere und vollständige Abdichtung gewährleistet. So kann die Dichtung beispielsweise bei Temperaturen unterhalb der Betriebstemperatur, beispielsweise bei Raumtemperatur oder geringer, einen Außenumfang aufweisen, welcher für einen solchen umfänglichen Andruck an das Extrudergehäuse sorgt, daß gerade (noch) eine einfache Montage möglich ist. Bei Betriebstemperatur dehnt sich die Dichtung dann entsprechend ihrem Wärmeausdehnungskoeffizienten der vorgenannten Beträge aus, was aufgrund ihrer geringeren Härte als das Extrudermaterial möglich ist, ohne daß es zu einer Blockierung der Rückstromsperre in dem Extruder oder gar zu einer Beschädigung kommt.

Während das Dichtungsmaterial der Dichtung des Sperrings, wie bereits erwähnt, grundsätzlich aus wenigstens einem verschleißfesten Polymer, Copolymer und/oder Polymer-Blend der vorgenannten Art gebildet ist, kann zur Erhöhung seiner Verschleißfestigkeit ferner vorgesehen sein, daß die Polymermatrix des Dichtungsmaterials der Dichtung des Sperrings mit Verstärkungsfasern und/oder -partikeln, wie beispielsweise Kohle- bzw. Carbon-, Glas, Aramidfasern etc. oder auch Naturfasern oder -partikeln, versetzt ist.

Darüber hinaus kann alternativ oder zusätzlich vorzugsweise vorgesehen sein, daß die Polymermatrix des Dichtungsmaterials der Dichtung des Sperrings mit zur Trockenschmierung geeigneten Partikeln, z.B. aus der Gruppe Molybdänsulfid (MoS), Graphit, Polytetrafluorethylen (PTFE) oder dergleichen, versetzt ist, um eine Reibungsverminderung während der Verlagerung der Rückstromsperre bzw. deren Sperring in Bezug auf die Wandung des Extruders sicherzustellen.

Das Dichtungsmaterial der Dichtung des Sperrings aus der Gruppe der Polymere, Copolymere oder Polymer-Blends der oben genannten Art kann grundsätzlich an die zu verarbeitenden Polymere/Prepolymere/Monomere angepaßt sein, wobei insbesondere im Falle einer Verarbeitung von plastifizierbaren Polymeren seine Schmelztemperatur jedenfalls in einem hinreichenden Maße oberhalb der Verarbeitungstemperatur solcher Polymere liegen muß. Das Dichtungsmaterial sollte dabei eine Temperaturfestigkeit von wenigstens 70°C, insbesondere von wenigstens 100°C, aufweisen, wobei aus den vorgenannten Gründen auch wesentlich höhere Temperaturfestigkeiten erforderlich sein können oder auch geringere, z.B. dann, wenn ausschließlich flüssige Ausgangsmaterialien eingesetzt werden, welche nach Einspritzen in ein Formwerkzeug in diesem ausgehärtet werden.

Als vorteilhafte Vertreter der genannten Polymere seien beispielhaft Dichtungsmaterialien aus der Gruppe der Polyetherketone (PEK), Polyetheretherketone (PEEK), Polyetheretheretherketone (PEEEK), Polyetherketonketone (PEKK), Polyetheretherketonketone (PEEKK), Polyetheretherketonetherketone (PEEKEK), Polyetherketonetheretherketone (PEKEEK) und Polyaryletherketone (PAEK) einschließlich Copolymeren und Polymer-Blends mit den vorgenannten Polymeren, insbesondere mit Polyetherimid (PEI), wie Polyaryletherketon-Polyetherimid-Blends (PAEK+PEI) oder dergleichen, erwähnt, welche nicht nur eine hohe Verschleißfestigkeit sowie einen relativ hohen Wärmeausdehnungskoeffizient, sondern auch eine sehr hohe Schmelztemperatur bis hin zu deutlich oberhalb 300°C aufweisen, so daß sie für eine einwandfreie Abdichtung bei praktisch beliebiger Betriebstemperatur zu sorgen vermögen.

Als weitere vorteilhafte Vertreter der genannten Polymere seien aus entsprechenden Gründen beispielhaft Dichtungsmaterialien aus der Gruppe der Polycaprolacatame (PA 6), Poly-(N,N'-tetramethylenadipindiamide) (PA 4.6), Poly-(N,N'-hexamethylenadipindiamide) (PA 6.6), Poly-(hexamethylensebacamide) (PA 6.10), Poly-(hexamethylendodecandiamide) (PA 6.12), Polyundecanolactame (PA 11), Polylauryllactame (PA 12), Poly-(m-phenylenisophthalamid) (PMPI), Poly-(p-phenylenterephthalamid) (PPTA), einschließlich der Gußpolyamide, wie PA 6-G, PA 12-G oder dergleichen, und einschließlich Copolymeren und Polymer-Blends mit den vorgenannten Polymeren, wie PA+Acrylnitril-Butadien-Styrol (ABS) Copolymeren, PA+EVA, PA+EPDM, PA+PPE, PA+PPS, PA+Kautschuk oder dergleichen, erwähnt.

Darüber hinaus stellen beispielsweise polyfluorierte Polyolefine, wie insbesondere Polytetrafluorethylen (PTFE), oder ultrahochmolekulares Polyethylen (UHMWPE, Ultra High Molecular Mass Polyethylene) geeignete Vertreter solcher Dichtungsmaterialien dar, so daß die Dichtung des Sperrings der Rückstromsperre PTFE und/oder UHMWPE enthalten oder gänzlich hieraus gebildet sein kann. UHMWPE weist üblicherweise eine Molmasse zwischen etwa 1 x 10⁶ und etwa 10 x 10⁶ g/Mol, in der Regel zwischen etwa 2 x 10⁶ und 6 x 10⁶ g/Mol, auf.

Die Dichtung kann z.B. durch Oberflächenbeschichtung auf den Außenumfang des Sperrings der Rückstromsperre aufgebracht sein, was mittels beliebiger bekannter Beschichtungsverfahren, wie beispielsweise Gießverfahren oder anderen, auf dem Gebiet der Polymertechnik bekannten Verfahren, geschehen kann.

Alternativ kann die Dichtung z.B. auch - gegebenenfalls unter Einsatz von entsprechenden Klebern - in eine Umfangsnut im Außenumfang des Sperrings der Rückstromsperre eingebracht sein.

In Bezug auf den konstruktiven Aufbau der Rückstromsperre kann vorgesehen sein, daß der mit der Dichtung versehene Sperring der Rückstromsperre axial verlagerbar angeordnet ist zwischen einer ersten Position, in welcher er gegen einen axialen Anschlagring der Rückstromsperre anliegt und auf diese Weise einen Durchlaß flüssiger Polymere, Prepolymere und/oder Monomere verhindert, und einer zweiten Position, in welcher er mit Abstand von dem Anschlagring angeordnet ist und auf diese Weise einen Durchlaß flüssiger Polymere, Prepolymere und/oder Monomere ermöglicht, wie es beispielsweise bei bekannten, zur Verarbeitung von Flüssigsilikonkautschuken (LSR) eingesetzten Rückstromsperren als solches bekannt ist.

Statt dessen ist es umgekehrt selbstverständlich auch denkbar, daß ein einen Anschlag für den mit der Dichtung versehenen Sperring der Rückstromsperre bildender Anschlagring axial verlagerbar angeordnet ist zwischen einer ersten Position, in welcher er gegen den Sperring der Rückstromsperre anliegt und auf diese Weise einen Durchlaß flüssiger Polymere, Prepolymere und/oder Monomere verhindert, und einer zweiten Position, in welcher er mit Abstand von dem Sperrring angeordnet ist und auf diese Weise einen Durchlaß flüssiger Polymere, Prepolymere und/oder Monomere ermöglicht.

Der mit der Dichtung versehene Sperring der Rückstromsperre bzw. der Anschlagring kann hierbei zweckmäßig in Richtung seiner ersten Position, in welcher er gegen den axialen Anschlagring der Rückstromsperre bzw. gegen den Sperring anliegt, insbesondere elastisch, vorbelastet sein.

Gemäß einer Weiterbildung der erfindungsgemäßen Vorrichtung kann ferner vorgesehen sein, daß zwischen der Rückstromsperre und der Austrittsöffnung des Extruders ein Einlaß zum Zudosieren von Hilfsstoffen, wie Katalysatoren, Aktivatoren oder dergleichen, vorgesehen ist, so daß dem Extruder aufgegebene reaktive Prepolymere unmittelbar vor dem Einspritzen in das Formwerkzeug entsprechende Aktivatoren oder Katalysatoren, Härtungsbeschleuniger, Vernetzungsmittel oder dergleichen zugesetzt werden können, ohne daß aufgrund der zuverlässigen Dichtigkeit der erfindungsgemäßen Dichtung des Sperrings die Gefahr einer (teilweisen) Polyreaktion der Prepolymere bereits in dem Extruder besteht.

Wie bereits angedeutet, ist die Erfindung im übrigen auf die Verwendung einer Vorrichtung der vorgenannten Art zur direkten Herstellung von Polymer-Formteilen gerichtet, wobei dem Extruder als Ausgangsmaterial flüssige Prepolymere und/oder Monomere, gegebenenfalls gemeinsam mit plastifizierbaren Polymeren und/oder gemeinsam mit Füllstoffen und/oder Verstärkungsfasern, aufgegeben und in das Formwerkzeug überführt und ausgehärtet werden.

Alternativ oder zusätzlich zu gegebenenfalls bereits dem Extruder aufgegebenen Füllstoffen und/oder Verstärkungsfasern kann ferner vorgesehen sein, daß in dem Formwerkzeug vor dem Überführen der Reaktionsmischung in dasselbe eine Faserstruktur vorgelegt wird, welche beispielsweise aus einem oder mehreren Konvolut(en) von Lang- oder Endlosfasern gebildet sein kann, welche dann von der insbesondere (noch) mehr oder minder flüssigen bis viskosen Reaktionsmischung unter inniger Anbindung an die durch Aushärten erzeugte Polymermatrix imprägniert werden.

Ferner kann vorzugsweise vorgesehen sein, daß dem Ausgangsmaterial die Aushärtung beschleunigende Katalysatoren und/oder Aktivatoren zugesetzt werden und/oder solche Katalysatoren und/oder Aktivatoren stromab der Rückstromsperre zudosiert werden, bevor die Reaktionsmischung in das Formwerkzeug überführt und ausgehärtet wird.

Weitere Merkmale und Vorteile der Erfindung ergeben sich aus der nachfolgenden Beschreibung eines Ausführungsbeispiels einer erfindungsgemäßen Vorrichtung zur Herstellung von Kunststoff-Formteilen unter Bezugnahme auf die Zeichnungen. Dabei zeigen:
- Fig. 1: eine schematische Seitenansicht einer Ausfühform einer Vorrichtung zur direkten Herstellung von Kunststoff-Formteilen;
- Fig. 2: eine schematische Detailansicht des Extruders der Vorrichtung gemäß Fig. 1 im Querschnitt;
- Fig. 3: eine schematische Schnittansicht einer Ausführungsform einer Rückstromsperre in der Sperrposition zur Erläuterung deren Funktion;
- Fig. 4: eine der Fig. 3 entsprechende schematische Schnittansicht der Rückstromsperre in der Durchlaßposition; und
- Fig. 5: eine Schnittansicht einer weiteren Ausführungsform einer Rückstromsperre des Extruders gemäß Fig. 2.

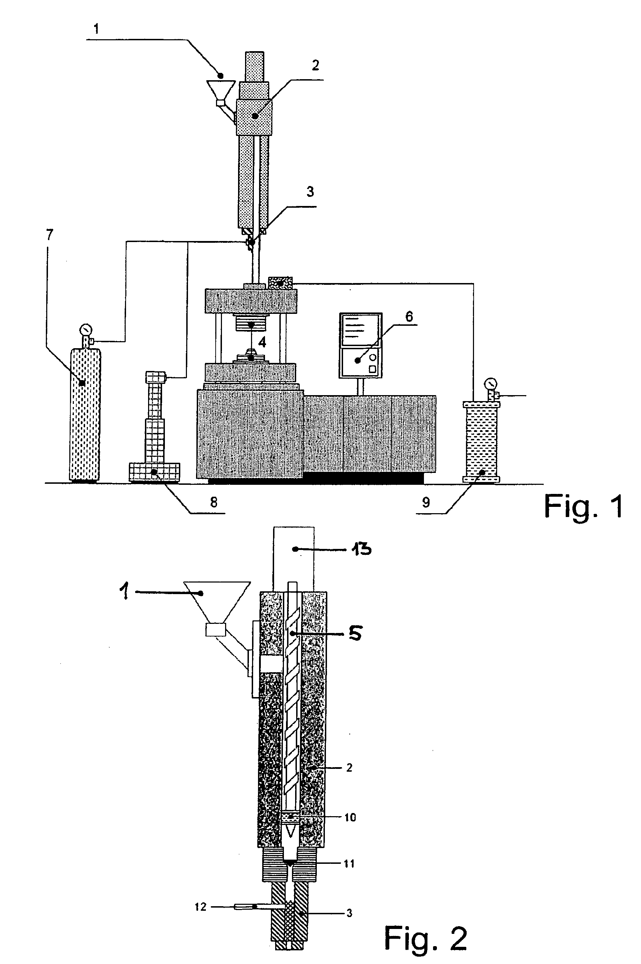

In Fig. 1 ist eine Vorrichtung zur direkten Herstellung von Kunststoff-Formteilen, ausgehend aus thermoplastischen Polymeren und/oder mehr oder minder flüssigen Prepolymeren, wie reaktiven Mono-, Di- und/oder Oligomeren, welche gegebenenfalls mit Füllstoffen und/oder Verstärkungsfasern bis hin zu einem hohen Füllgrad versetzt werden können, schematisch dargestellt. Die Vorrichtung umfaßt eine z.B. nach Art eines Trichters ausgebildete Aufgabeeinrichtung 1, welche im Bereich des Endes eines Extruders 2 angeordnet ist, welcher vorzugsweise im wesentlichen senkrecht angeordnet ist, um flüssige Prepolymere oder auch sehr gering viskose Polymerschmelzen gravitativ nach unten in Richtung seiner Austrittsöffnung zu fördern. An den Extruder 2 schließt sich (in Fig. 1 unten) eine z.B. im wesentlichen T-förmige Mischdüse 3 (vgl. auch Fig. 2) an, deren Einlaß 12 mit einem Reservoir 8 verbunden ist, welches z.B. zur Initiierung und/oder Beschleunigung der Polyreaktion von eingesetzten Prepolymeren geeignete Aktivatoren, Katalysatoren oder dergleichen aufnimmt. Letztere sind mittels einer nicht näher dargestellten Dosierpumpe gesteuert dosierbar. Darüber hinaus kann ein an die die Mischdüse 3 angeschlossenes Druckreservoir 7, z.B. in Form eines Stickstoffspeichers, vorgesehen sein, um die Mischdüse 3 sowie den hiermit korrespondierenden Innenraum des Extruders 2 nach einem erfolgten Spritzvorgang auszuspülen. An die stromab der Mischdüse 3 angeordnete Austrittsöffnung des Extruders 2 schließt sich wiederum ein Formwerkzeug 4 an, welches sich in dem in Fig. 1 dargestellten Zustand in geöffneter Position befindet und dessen Oberwerkzeug zwischen der geöffneten und einer geschlossenen Position (nicht gezeigt), in welcher es den zwischen dem Oberwerkzeug und dem Unterwerkzeug gebildeten Formraum dicht verschließt, verfahren werden kann. Das Formwerkzeug 4 ist ferner temperierbar, wobei es vorzugsweise sowohl beheizbar (z.B. um Prepolymere in dem Formwerkzeug zu dem Polymer-Formteil auszuhärten) als auch kühlbar ist (z.B. um plastifizierte Polymere in dem Formwerkzeug zu dem Polymer-Formteil zu erstarren). Mit dem Bezugszeichen 9 ist eine Vakuumfalle angedeutet, welche während des Ausblasens der Mischdüse 3 und der Austrittsöffnung des Extruders 2 zur Aufnahme der ausgespülten Verunreinigungen dient.

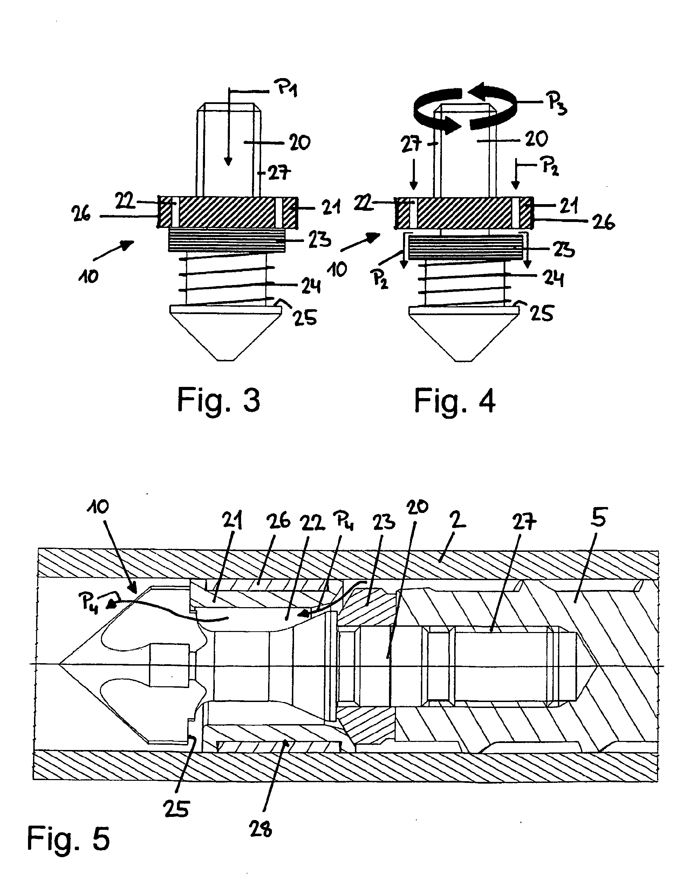

Wie aus Fig. 2 ersichtlich, ist in dem Extruder 2 eine mit einem Antrieb 13 verbundene Schnecke 5 derart geführt, daß sie einerseits drehbar ist, um über die Aufgabeeinrichtung 1 aufgegebene Polymere plastifizieren zu können und grundsätzlich sämtliche aufgegebenen Komponenten, wie Polymere, Prepolymere, Füll- und Verstärkungsstoffe zu homogenisieren. Andererseits ist die Schnecke 5 axial - beim vorliegenden Ausführungsbeispiel etwa vertikal - verlagerbar, um die dem Extruder 2 aufgegebenen Komponenten durch Vorrücken der Schnecke 5 nach unten in das Formwerkzeug 4 einzuspritzen. Im Bereich des dem Antrieb 13 abgewandten freien Endes der Schnecke 5 ist eine weiter unten unter Bezugnahme auf die Fig. 3 bis 5 näher erläuterte Rückstromsperre 10 angeordnet. Stromab der Rückstromsperre 10 kann ein Ventil 11, z.B. nach Art einer Nadelverschlußdüse, vorgesehen sein, wie sie als solche bei herkömmlichen Spritzgießmaschinen bekannt ist und welche dazu dient, einen Austritt von plastifizierten Polymeren/Prepolymeren aus dem Extruder 5 während des Extrudiervorgangs bzw. vor dem Einspritzen in das Formwerkzeug 4 zu verhindern. Wiederum stromab der Nadelverschlußdüse 11 schließt sich die Mischdüse 3 an, deren Einlaß 12, wie oben erwähnt, zum Zudosieren einer geeigneten Menge an Aktivatoren, Katalysatoren etc. dient, sofern zumindest teilweise polyreaktive Prepolymere eingesetzt werden.

In Fig. 3 und 4 ist die Funktionsweise der Rückstromsperre 10 anhand von Schemazeichnungen näher erläutert. Wie hieraus erkennbar, umfaßt die Rückstromsperre 10 einen z.B. starr an einem Tragteil 20 festgelegten Sperring 21, welcher gegen die innere Umfangswand des Extruders 2 (Fig. 2) anliegt. Der Sperring 21 ist mit Durchlässen 22 - hier beispielsweise in Form eines den Sperring 21 axial durchsetzenden Ringkanals - versehen, welche von einem an dem Tragteil 20 axial verlagerbar geführten Anschlagring 23 verschlossen sind, sofern letzterer gegen den Sperring 21 anstößt (Fig. 3'). Der Anschlagring 23 kann hierzu, beispielsweise mittels einer Schraubenfeder 24, welche zwischen dem Anschlagring 23 und einem Absatz 25 im Bereich des freien Endes des Tragteils 20 sitzt, elastisch gegen den Sperring 21 vorbelastet sein.

Befindet sich der Anschlagring 23 in seiner in Fig. 3 dargestellten Sperrposition, in welcher er gegen den Sperring 21 anliegt und dessen Durchlässe 22 verschließt, so wird verhindert, daß plastifizierte Polymere bzw. flüssige Prepolymere die Rückstromsperre 10 passieren können, wie es insbesondere während des Einspritzvorgangs der Fall ist, wenn die Rückstromsperre 10 gemeinsam mit der Schnecke 5 des Extruder 2 (Fig. 2) nach vorne (in Fig. 3 nach unten in Richtung des Pfeils P₁) verrückt wird, um die gewünschte Menge an Polymer/Prepolymer in das Formwerkzeug 4 (Fig. 1) einzuspritzen.

Befindet sich der Anschlagring 23 in seiner in Fig. 4 dargestellten Durchlaßposition, in welcher er unter einem zumindest geringen axialen Anstand von dem Sperring 21 angeordnet ist, so vermögen die plastifizierten Polymere bzw. die flüssigen Prepolymere die Rückstromsperre 10 zu passieren (vgl. die Pfeile P₂ gemäß Fig. 4), bis sie von der Nadelverschlußdüse 11 zurückgehalten werden. Dies ist während des Extrudiervorgangs der Fall, wenn die Schnecke 5 des Extruders 2 in Richtung des Pfeils P3 rotiert wird. Der hierbei in dem Extruder 2 aufgebaute Druck sorgt für das Öffnen des Anschlagrings 23 entgegen seiner Federbelastung. Die Rückstromsperre 10 kann im übrigen z.B. mittels eines Gewindes 27 in eine stirnseitige Gewindebohrung der Schnecke 5 des Extruders 2 lösbar festgelegt sein (vgl. auch Fig. 5).

Weist eine erfindungsgemäße Rückstromsperre 10 hierbei einen mit einer auf den Außenumfang des Sperring 21 aufgebrachten - beispielsweise hierauf aufgegossenen - Dichtung 26 aus einem Dichtungsmaterial aus der Gruppe der Polymere, Copolymere oder Polymer-Blends mit einer geringeren Härte als das Material der Umfangswandung des Extruders auf, so werden auch unter dem sehr hohen Druck des Einspritzvorgangs und auch bei sehr gering viskosen bis flüssigen plastifizierten Polymeren und/oder Prepolymeren Leckströmungen zwischen dem Sperring 21 und der Innenwandung des Extruders 2 (Fig. 2) zuverlässig verhindert, wodurch eine äußerst exakte und reproduzierbare Dosierung der eingespritzten Menge möglich wird. Die Dichtung 26 erstreckt sich vorzugsweise einstückig um den gesamten Außenumfang des Sperrings 21 herum und ist beispielsweise aus verschleißfestem Gußpolyamid PA-6G mit einem Wärmeausdehnungskoeffizienten von etwa 80 x 10⁻⁶/K gefertigt, welchem zusätzlich Verstärkungsfasern und/oder -partikel, beispielsweise Kohlefasern, zur weiteren Erhöhung der Verschleißfestigkeit zugesetzt sein können. Darüber hinaus kann das Dichtungsmaterial mit zur Trockenschmierung geeigneten Partikeln, beispielsweise aus Molybdänsulfid (MoS) oder dergleichen, versetzt sein, um für eine Reibungsverminderung während der Verlagerung der Rückstromsperre 10 bzw. deren Sperring 21 in Bezug auf die Wandung des Extruders 2 zu sorgen. Ferner kann die Dichtung 26 des Sperrings 21 insbesondere unter umfänglichem Andruck an die Umfangswandung des Extruders 2 montiert sein, so daß sie sich bei einem gegenüber der Montagetemperatur höheren Betriebstemperatur ausdehnt und eine höchst sichere, vollständige Dichtigkeit gewährleistet.

Fig.5 zeigt schließlich eine andere Ausführungsform einer erfindungsgemäßen Rückstromsperre 10, bei welcher entsprechende bzw. wirkungsgleiche Teile mit denselben Bezugszeichen versehen sind. Die in Fig. 5 dargestellte Ausführungsform der Rückstromsperre 10 unterscheidet sich von der gemäß Fig. 3 und 4 einerseits dadurch, daß die Dichtung 26 nicht durch Oberflächenbeschichtungsverfahren auf den Sperring 21 aufgebracht, sondern in eine Umfangsnut 28 desselben eingebracht ist. Darüber hinaus ist in diesem Fall der Anschlagring 23 starr - d.h. axialfest - an dem Tragteil 20 der Rückstromsperre 10 angeordnet, während der Sperring 21 axial verlagerbar ist zwischen einer Sperrposition, in welcher er gegen den Anschlagring 23 anstößt (in Fig. 5 unten), und einer Durchlaßposition, in welcher er gegen den Absatz 25 anstößt (in Fig. 5 oben), wobei auch in diesem Fall der Sperring 21, insbesondere elastisch, gegen den Anschlagring 23 vorbelastet sein kann (in Fig. 5 nicht im einzelnen wiedergegeben). Die Pfeile P₄ geben wiederum die Fließrichtung des Polymers/Prepolymers in der in der Durchlaßposition befindlichen Rückstromsperre 10 an.

Nachstehend ist die Verwendung einer Vorrichtung der vorbeschriebenen Art zur direkten Herstellung von Polymer-Formteilen exemplarisch anhand von Ausführungsbeispielen erläutert:

### Beispiel 1:

Anionische Ringöffnungspolymerisation von ε-Caprolactam zu Polycaprolacatam (PA 6):
Edukte:
   - 100 Teile ε-Caprolactam,
   - Füllstoffe/Verstärkungsfasern (optional),
   - 1,6 Teile ε-Caprolactam-geblocktes Diisocyanat als Aktivator (über Mischdüse 3 zugesetzt),
   - 2,2 Teile ε-Caprolactam mit Natriumsalz als Katalysator (über Mischdüse 3 zugesetzt).
Prozeßparameter:
   - Extrusionstemperatur ca. 70°C bis 120°C unter Ausschluß von Feuchte,
   - Reaktionstemperatur im Formwerkzeug ca. 155°C bis 160°C,
   - Viskosität des geschmolzenen ε-Caprolactams (Tₘ = 69°C): 5 mPas,
   - Polymerisationszeit 3 min bis 5 min.
Produkte:
   - hochmolekulares PA6 (Umsatz: 99,3%).

### Beispiel 2:

Ringöffnungspolymerisation von zyklischem Butylenterephthalat-Oligomeren (CBT) zu semikristallinem Polybutylenterephthalat (PBT):
Edukte: - 100 Teile CBT-Oligomere,
   - Füllstoffe/Verstärkungsfasern (optional),
   - 0,03 Teile Titankomplex als Initiator (über Mischdüse 3 zugesetzt).
Prozeßparameter: - Extrusionstemperatur ca. 145°C bis 160°C unter Ausschluß von Feuchte,
   - Reaktionstemperatur im Formwerkzeug ca. 180°C bis 200°C,
   - Viskosität des geschmolzenen CBT-Oligomers (bei 190°C): 30 mPas (Viskosität steigt nach Zusetzen des Initiators innerhalb von 5 min auf 1000 mPas an),
   - Polymerisationszeit 30 min.
Produkte:
   - hochmolekulares semikristallines PBT (Umsatz: 95% bis 99%).

### Beispiel 3:

Polyaddition von Di- bzw. Polyolen mit Di- bzw. Polyisocyanaten zu Polyurethanen (PU):
Edukte: - ca. 50 Mol-% Di- und/oder Polyole,
   - ca. 50 Mol-% Di- und/oder Polyisocyanate,
   - Füllstoffe/Verstärkungsfasern (optional).
Prozeßparameter: - Extrusionstemperatur ca. 20°C bis 60°C,
   - Reaktionstemperatur im Formwerkzeug ca. 20°C bis 60°C,
   - Viskosität der Di- und/oder Polyole bzw. der Di- und/oder Polyisocyanate (bei 20°C): ca. 200 mPas,
   - Polymerisationszeit (je nach eingesetzten Di-/Polyole bzw. -isocyanate) ca. 10 s bis ca. 3 min.
Produkte:
   - hochmolekulares Polyurethan.

## Patentansprüche

1. Vorrichtung zur Herstellung von Kunststoff-Formteilen, mit einem Extruder (2) und einem stromab einer Austrittsöffnung des Extruders (2) angeordneten Formwerkzeug (4), wobei in dem Extruder (2) eine Schnecke (5) derart geführt ist, daß sie einerseits drehbar (P₃), andererseits axial verlagerbar (P₁) ist, um in dem Extruder (2) befindliche plastifizierte oder flüssige Polymere, Prepolymere und/oder Monomere in das Formwerkzeug (4) zu überführen, wobei im Bereich des freien Endes der Schnecke (5) eine Rückstromsperre (10) angeordnet ist, wobei wenigstens ein gegen die innere Umfangswandung des Extruders (2) wirkender Sperring (21) der Rückstromsperre (10) eine auf zumindest einen Teil seines Außenumfangs aufgebrachte Dichtung (26) aufweist, welche den Sperring (21) gegen die Umfangswandung des Extruders (2) abdichtet, **dadurch gekennzeichnet, daß** das verschleißfeste Dichtungsmaterial der Dichtung (26) des Sperrings (21) aus der Gruppe der Polyetherketone (PEK) und deren Derivate, der Polyaryletherketone (PAEK) und deren Derivate, der polyhalogenierten Polyolefine, der hochmolekularen Polyolefine mit einer Molmasse von wenigstens 100.000 g/Mol und der Polyamide (PA) einschließlich Copolymeren und Polymer-Blends mit denselben mit einer geringeren Härte als das Material der Umfangswandung des Extruders (2) gewählt ist.

2. Vorrichtung nach Anspruch 1, **dadurch gekennzeichnet, daß** das Dichtungsmaterial der Dichtung (26) des Sperrrings (21) einen Wärmeausdehnungskoeffizienten von wenigstens 30 x 10⁻⁶/K, insbesondere von wenigstens 35 x 10⁻⁶/K, vorzugsweise von wenigstens 40 x 10⁻⁶/K, aufweist.

3. Vorrichtung nach Anspruch 1 oder 2, **dadurch gekennzeichnet, daß** die Dichtung (26) des Sperrings (21) unter umfänglichem Andruck an die Umfangswandung des Extruders (2) montiert ist.

4. Vorrichtung nach einem der Ansprüche 1 bis 3, **dadurch gekennzeichnet, daß** die Polymermatrix des Dichtungsmaterials der Dichtung (26) des Sperrings (21) mit Verstärkungsfasern und/oder -partikeln versetzt ist.

5. Vorrichtung nach einem der Ansprüche 1 bis 4, **dadurch gekennzeichnet, daß** die Polymermatrix des Dichtungsmaterials der Dichtung (26) des Sperrings (21) mit zur Trockenschmierung geeigneten Partikeln, insbesondere aus der Gruppe Molybdänsulfid (MoS), Graphit und Polytetrafluorethylen (PTFE), versetzt ist.

6. Vorrichtung nach einem der Ansprüche 1 bis 5, **dadurch gekennzeichnet, daß** das Dichtungsmaterial der Dichtung (26) des Sperrings (21) eine Temperaturfestigkeit von wenigstens 70°C, insbesondere von wenigstens 100°C, aufweist.

7. Vorrichtung nach einem der Ansprüche 1 bis 6, **dadurch gekennzeichnet, daß** das Dichtungsmaterial der Dichtung (26) des Sperrings (21) aus der Gruppe der
- Polyetherketone (PEK), Polyetheretherketone (PEEK), Polyetheretheretherketone (PEEEK), Polyetherketonketone (PEKK), Polyetheretherketonketone (PEEKK), Polyetheretherketonetherketone (PEEKEK), Polyetherketonetheretherketone (PEKEEK) und Polyaryletherketone (PAEK) einschließlich Copolymeren und Polymer-Blends mit den vorgenannten Polymeren, insbesondere mit Polyetherimid (PEI), wie Polyaryletherketon-Polyetherimid-Blends (PAEK+PEI) oder dergleichen,
oder aus der Gruppe der
- Polycaprolacatame (PA 6), Poly-(N,N'-tetramethylen-adipindiamide) (PA 4.6), Poly-(N,N'-hexamethylen-adipindiamide) (PA 6.6), Poly-(hexamethylen-sebacamide) (PA 6.10), Poly-(hexamethylendodecan-diamide) (PA 6.12), Polyundecanolactame (PA 11), Polylauryllactame (PA 12), Poly-(m-phenylenisophthalamid) (PMPI), Poly-(p-phenylenterephthalamid) (PPTA), einschließlich der Gußpolyamide, wie PA 6-G, PA 12-G oder dergleichen, und einschließlich Copolymeren und Polymer-Blends mit den vorgenannten Polymeren, wie PA+Acrylnitril-Butadien-Styrol (ABS) Copolymeren, PA+EVA, PA+EPDM, PA+PPE, PA+PPS, PA+Kautschuk oder dergleichen,
gewählt ist.

8. Vorrichtung nach einem der Ansprüche 1 bis 6, **dadurch gekennzeichnet, daß** das Dichtungsmaterial der Dichtung (26) des Sperrings (21)
- polyfluorierte Polyolefine, insbesondere Polytetrafluorethylen (PTFE), oder
- ultrahochmolekulares Polyethylen (UHMWPE, Ultra High Molecular Mass Polyethylene)
enthält oder gänzlich hieraus gebildet ist.

9. Vorrichtung nach einem der Ansprüche 1 bis 10, **dadurch gekennzeichnet, daß** die Dichtung (26)
- durch Oberflächenbeschichtung auf den Außenumfang des Sperrings (21) aufgebracht, oder
- in eine Umfangsnut (28) im Außenumfang des Sperrings (21) eingebracht
ist.

10. Vorrichtung nach einem der Ansprüche 1 bis 9, **dadurch gekennzeichnet, daß** der mit der Dichtung (26) versehene Sperring (21) der Rückstromsperre (10) axial verlagerbar angeordnet ist zwischen einer ersten Position, in welcher er gegen einen axialen Anschlagring (23) der Rückstromsperre (10) anliegt und auf diese Weise einen Durchlaß flüssiger Polymere, Prepolymere und/oder Monomere verhindert, und einer zweiten Position, in welcher er mit Abstand von dem Anschlagring (23) angeordnet ist und auf diese Weise einen Durchlaß flüssiger Polymere, Prepolymere und/oder Monomere ermöglicht.

11. Vorrichtung nach einem der Ansprüche 1 bis 9, **dadurch gekennzeichnet, daß** ein einen Anschlag für den mit der Dichtung (26) versehenen Sperring (21) der Rückstromsperre (10) bildender Anschlagring (23) axial verlagerbar angeordnet ist zwischen einer ersten Position, in welcher er gegen den Sperring (21) der Rückstromsperre (10) anliegt und auf diese Weise einen Durchlaß flüssiger Polymere, Prepolymere und/oder Monomere verhindert, und einer zweiten Position, in welcher er mit Abstand von dem Sperring (21) angeordnet ist und auf diese Weise einen Durchlaß flüssiger Polymere, Prepolymere und/oder Monomere ermöglicht.

12. Vorrichtung nach Anspruch 10 oder 11, **dadurch gekennzeichnet, daß** der mit der Dichtung (26) versehene Sperring (21) der Rückstromsperre (10) bzw. der Anschlagring (23) in Richtung seiner ersten Position, in welcher er gegen den Anschlagring (23) bzw. gegen den Sperring (21) der Rückstromsperre (10) anliegt, insbesondere elastisch, vorbelastet ist.

13. Vorrichtung nach einem der Ansprüche 1 bis 12, **dadurch gekennzeichnet, daß** zwischen der Rückstromsperre (10) und der Austrittsöffnung des Extruders (2) ein Einlaß (12) zum Zudosieren von Hilfsstoffen, wie Katalysatoren, Aktivatoren oder dergleichen, vorgesehen ist.

14. Rückstromsperre zur Anordnung im Bereich des freien Endes der Schnecke (5) eines Extruders (2), insbesondere einer Vorrichtung nach einem der Ansprüche 1 bis 13, wobei die Rückstromsperre (10) wenigstens einen gegen eine innere Umfangswand des Extruders (2) wirkenden Sperring (21) aufweist, welcher eine auf zumindest einen Teil seines Außenumfangs aufgebrachte Dichtung (26) aufweist, **dadurch gekennzeichnet, daß** das verschleißfeste Dichtungsmaterial der Dichtung (26) des Sperrings (21) aus der Gruppe der Polyetherketone (PEK) und deren Derivate, der Polyaryletherketone (PAEK) und deren Derivate, der polyhalogenierten Polyolefine, der hochmolekularen Polyolefine mit einer Molmasse von wenigstens 100.000 g/Mol und der Polyamide (PA) einschließlich Copolymeren und Polymer-Blends mit denselben mit einer geringeren Härte als das Material der Umfangswandung des Extruders (2) gewählt ist.

15. Verwendung einer Vorrichtung nach einem der Ansprüche 1 bis 13 zur direkten Herstellung von Polymer-Formteilen, wobei dem Extruder (2) als Ausgangsmaterial flüssige Prepolymere und/oder Monomere, gegebenenfalls gemeinsam mit plastifizierbaren Polymeren und/oder gemeinsam mit Füllstoffen und/oder Verstärkungsfasern, aufgegeben und in das Formwerkzeug (4) überführt und ausgehärtet werden.

16. Verwendung nach Anspruch 15, **dadurch gekennzeichnet, daß** in dem Formwerkzeug vor dem Überführen der Reaktionsmischung in dasselbe eine Faserstruktur vorgelegt wird.

17. Verwendung nach Anspruch 15 oder 16, **dadurch gekennzeichnet, daß** dem Ausgangsmaterial die Aushärtung beschleunigende Katalysatoren und/oder Aktivatoren zugesetzt werden und/oder solche Katalysatoren und/oder Aktivatoren stromab der Rückstromsperre (10) zudosiert werden, bevor die Reaktionsmischung in das Formwerkzeug (4) überführt und ausgehärtet wird.

## Claims

1. A device for producing plastic mouldings, the device comprising an extruder (2) and a moulding tool (4) being arranged downstream of a discharge opening of the extruder (2), wherein a screw (5) is guided in the extruder (2) such that it is both rotatable (P₃) and axially displaceable (P₁), in order to transfer plasticized or liquid polymers, prepolymers and/or monomers present in the extruder (2) into the moulding tool (4), wherein a non-return valve (10) is arranged in an area of a free end of the screw (5), wherein at least one locking ring (21) of the non-return valve (10) acting against an inner circumferential wall of the extruder (2) has a seal (26) applied to at least part of an outer circumference thereof, said seal (26) sealing the locking ring (21) against the circumferential wall of the extruder (2), **characterised in that** the wear-resistant sealing material of the seal (26) of the locking ring (21) is selected from the group of the polyether ketones (PEK) and derivatives thereof, the polyaryl ether ketones (PAEK) and derivatives thereof, the polyhalogenated polyolefins, the high-molecular-weight polyolefins with a molecular weight of at least 100,000 g/mole and the polyamides (PA) including copolymers and polymer blends with same, with a hardness lower than that of the material of the circumferential wall of the extruder (2).

2. A device in accordance with claim 1, **characterised in that** the sealing material of the seal (26) of the locking ring (21) has a coefficient of thermal expansion of at least 30 x 10⁻⁶/K, in particular of at least 35 x 10⁻⁶/K, preferably of at least 40 x 10⁻⁶/K.

3. A device in accordance with claim 1 or 2, **characterised in that** the seal (26) of the locking ring (21) is mounted under circumferential contact pressure on the circumferential wall of the extruder (2).

4. A device in accordance with any one of claims 1 to 3, **characterised in that** the polymer matrix of the sealing material of the seal (26) of the locking ring (21) is mixed with reinforcing fibers and/or particles.

5. A device in accordance with any one of claims 1 to 4, **characterised in that** the polymer matrix of the sealing material of the seal (26) of the locking ring (21) is mixed with particles suitable for dry lubrication, in particular from the group comprising molybdenum sulfide (MoS), graphite and polytetrafluoroethylene (PTFE).

6. A device in accordance with any one of claims 1 to 5, **characterised in that** the sealing material of the seal (26) of the locking ring (21) has a temperature resistance of at least 70°C, in particular of at least 100°C.

7. A device in accordance with any one of claims 1 to 6, **characterised in that** the sealing material of the seal (26) of the locking ring (21) is selected from the group of the
- polyether ketones (PEK), polyether ether ketones (PEEK), polyether ether ether ketones (PEEEK), polyether ketone ketones (PEKK), polyether ether ketone ketones (PEEKK), polyether ether ketone ether ketones (PEEKEK), polyether ketone ether ether ketones (PEKEEK) and polyaryl ether ketones (PAEK), including copolymers and polymer blends with the above-mentioned polymers, in particular with polyether imide (PEI), such as polyaryl ether ketone-polyether imide blends (PAEK+PEI) or the like,
or is selected from the group of the
- polycaprolactams (PA 6), poly-(N,N'-tetramethylene adipine diamides) (PA 4.6), poly-(N,N'-hexamethylene adipine diamides) (PA 6.6), poly-(hexamethylene sebacamides) (PA 6.10), poly-(hexamethylene decane diamides) (PA 6.12), polyundecanolactams (PA 11), polylauryl lactams (PA 12), poly-(m-phenylene isophthalamide) (PMI), poly-(p-phenylene terephthalamide) (PPTA), including the cast polyamides, such as PA 6-G, PA 12-G or the like, and including copolymers and polymer blends with the above-mentioned polymers, such as PA+acrylonitrile-butadiene-styrene (ABS) copolymers, PA+EVA, PA+EPDM, PA+PPE, PA+PPS, PA+rubber or the like.

8. A device in accordance with any one of claims 1 to 6, **characterised in that** the sealing material of the seal (26) of the locking ring (21) contains or is formed entirely from
- polyfluorinated polyolefins, in particular polytetrafluoroethylene (PTFE), or
- ultra-high-molecular-weight polyethylene (UHMWPE).

9. A device in accordance with any one of claims 1 to 8, **characterised in that** the seal (26) is
- applied to the outer circumference of the locking ring (21) by surface coating, or
- inserted into a circumferential groove (28) in the outer circumference of the locking ring (21).

10. A device in accordance with any one of claims 1 to 9, **characterised in that** the locking ring (21) of the non-return valve (10) provided with the seal (26) is arranged axially displaceably between a first position, in which the locking ring (21) is in contact with an axial stop ring (23) of the non-return valve (10) and prevents the passage of liquid polymers, prepolymers and/or monomers, and a second position, in which the locking ring (21) is arranged at a spaced location from the stop ring (23) and makes possible the passage of liquid polymers, prepolymers and/or monomers.

11. A device in accordance with any one of claims 1 to 9, **characterised in that** a stop ring (23) forming a stop for the locking ring (21) of the non-return valve (10) provided with the seal (26) is arranged axially displaceably between a first position, in which the stop ring (23) is in contact with the locking ring (21) of the non-return valve (10) and prevents the passage of liquid polymers, prepolymers and/or monomers, and a second position, in which the stop ring (23) is arranged at a spaced location from the locking ring (21) and makes possible the passage of liquid polymers, prepolymers and/or monomers.

12. A device in accordance with claim 10 or 11, **characterised in that** the locking ring (21) of the non-return valve (10) provided with the seal (26) and the stop ring (23), respectively, is pre-stressed, in particular elastically, in the direction of the first position, in which it is in contact with the stop ring (23) and the locking ring (21), respectively, of the non-return valve (10).

13. A device in accordance with any one of claims 1 to 12, **characterised in that** an inlet (12) for adding auxiliary agents, such as catalysts, activators or the like, is provided between the non-return valve (10) and the discharge opening of extruder (2).

14. A non-return valve for being arranged in an area of a free end of a screw (5) of an extruder (2), in particular of a device in accordance with any one of claims 1 to 13, the non-return valve (10) comprising at least one locking ring (21) which acts against an inner circumferential wall of the extruder (2) and which has a seal (26) applied to at least part of an outer circumference thereof, **characterised in that** the wear-resistant sealing material of the seal (26) of the locking ring (21) is selected from the group of the polyether ketones (PEK) and derivatives thereof, the polyaryl ether ketones (PAEK) and derivatives thereof, the polyhalogenated polyolefins, the high-molecular-weight polyolefins with a molecular weight of at least 100,000 g/mole and the polyamides (PA), including copolymers and polymer blends with same with a hardness lower than that of a material of a circumferential wall of the extruder (2).

15. A use of a device in accordance to any one of claims 1 to 13 for directly producing plastic mouldings, wherein liquid prepolymers and/or monomers, as the case may be together with plasticisable polymers and/or together with fillers and/or reinforcing fibers, are fed into the extruder (2) as starting material, and are transferred into the moulding tool (4) and are cured.

16. A use in accordance with claim 15, **characterised in that** a fiber structure is charged in advance into the moulding tool before the reaction mixture is transferred into same.

17. A use in accordance with claim 15 or 16, **characterised in that** catalysts and/or activators accelerating the curing are added to the starting material, and/or such catalysts and/or activators are added downstream of the non-return valve (10) before the reaction mixture is transferred into the moulding tool (4) and cured.

## Revendications

1. Dispositif de fabrication de pièces moulées en plastique, avec une extrudeuse (2) et un outil de moulage (4) disposé en aval d'une ouverture de sortie de l'extrudeuse (2), dans lequel une vis sans fin (5) est guidée dans l'extrudeuse (2) de façon à pouvoir d'une part tourner (P₃) et d'autre part se déplacer axialement (P₁), afin de transférer des polymères, des prépolymères et/ou des monomères plastifiés ou liquides se trouvant dans l'extrudeuse (2) dans l'outil de moulage (4), dans lequel un barrage anti-retour (10) est disposé dans la région de l'extrémité libre de la vis sans fin (5), dans lequel au moins une bague d'arrêt (21) du barrage anti-retour (10) agissant contre la paroi périphérique intérieure de l'extrudeuse (2) présente un joint (26) posé sur au moins une partie de sa périphérie extérieure, qui assure l'étanchéité entre la bague d'arrêt (21) et la paroi périphérique de l'extrudeuse (2), **caractérisé en ce que** le matériau d'étanchéité résistant à l'usure du joint (26) de la bague d'arrêt (21) est choisi dans le groupe des polyéthercétones (PEK) et leurs dérivés, des polyaryléthercétones (PAEK) et leurs dérivés, des polyoléfines polyhalogénées, des polyoléfines à haut poids moléculaire avec une masse molaire d'au moins 100 000 g/mole, et des polyamides (PA), y compris des copolymères et des mélanges de polymères avec les mêmes avec une dureté plus faible que le matériau de la paroi périphérique de l'extrudeuse (2).

2. Dispositif selon la revendication 1, **caractérisé en ce que** le matériau d'étanchéité du joint (26) de la bague d'arrêt (21) présente un coefficient de dilatation thermique d'au moins 30x10⁻⁶/K, en particulier d'au moins 35x10⁻⁶/K, de préférence d'au moins 40x10⁻⁶/K.

3. Dispositif selon la revendication 1 ou 2, **caractérisé en ce que** le joint (26) de la bague d'arrêt (21) est monté sous une pression d'application périphérique sur la paroi périphérique de l'extrudeuse (2).

4. Dispositif selon l'une quelconque des revendications 1 à 3, **caractérisé en ce que** la matrice polymère du matériau d'étanchéité du joint (26) de la bague d'arrêt (21) est mélangée à des fibres et/ou des particules de renforcement.

5. Dispositif selon l'une quelconque des revendications 1 à 4, **caractérisé en ce que** la matrice polymère du matériau d'étanchéité du joint (26) de la bague d'arrêt (21) est mélangée à des particules convenant pour la lubrification à sec, en particulier du groupe composé du sulfure de molybdène (MoS), du graphite et du polytétrafluoroéthylène (PTFE).

6. Dispositif selon l'une quelconque des revendications 1 à 5, **caractérisé en ce que** le matériau d'étanchéité du joint (26) de la bague d'arrêt (21) présente une résistance à la température d'au moins 70°C, en particulier d'au moins 100°C.

7. Dispositif selon l'une quelconque des revendications 1 à 6, **caractérisé en ce que** le matériau d'étanchéité du joint (26) de la bague d'arrêt (21) est choisi dans le groupe des
- polyéthercétones (PEK), polyétheréthercétones (PEEK), polyétherétheréthercétones (PEEEK), polyéthercétonecétones (PEKK), polyétheréthercétonecétones (PEEKK), polyétheréthercétoneéthercétones (PEEKEK), polyéthercétoneétheréthércétones (PEKEEK) et polyaryléthercétones (PAEK), y compris des copolymères et des mélanges de polymères avec les polymères précités, en particulier avec un polyétherimide (PEI), comme des mélanges de polyaryléthercétone-polyétherimide (PAEK+PEI) ou analogues,
ou dans le groupe des
- polycaprolactames (PA 6), poly-(N,N'-tétraméthylène-adipine-diamides) (PA 4.6), poly-(N,N'-hexaméthylène-adipine-diamides) (PA 6.6), poly-(hexaméthylène-sébacamides) (PA 6.10), poly-(hexaméthylène-dodécane-diamides) (PA 6.12), polyundécanolactames (PA 11), polylauryllactames (PA 12), poly-(m-phénylène-isophtalamides) (PMPI), poly-(p-phénylène-téréphtalamide) (PPTA), y compris des polyamides coulés, comme le PA 6-G, le PA 12-G ou analogues, et y compris des copolymères et des mélanges de polymères avec les polymères précités, comme PA + copolymères acrylonitrile-butadiène-styrène (ABS), PA + EVA, PA + EPDM, PA + PPE, PA + PPS, PA + caoutchouc ou analogues.

8. Dispositif selon l'une quelconque des revendications 1 à 6, **caractérisé en ce que** le matériau d'étanchéité du joint (26) de la bague d'arrêt (21) contient ou est entièrement formé de
- polyoléfines polyfluorées, en particulier de polytétrafluoroéthylène (PTFE), ou
- polyéthylène à très haut poids moléculaire (UHMWPE, Ultra High Molecular Mass Polyethylene).

9. Dispositif selon l'une quelconque des revendications 1 à 8, **caractérisé en ce que** le joint (26)
- est déposé par recouvrement superficiel sur la périphérie extérieure de la bague d'arrêt (21), ou
- est inséré dans une rainure périphérique (28) dans la périphérie extérieure de la bague d'arrêt (21).

10. Dispositif selon l'une quelconque des revendications 1 à 9, **caractérisé en ce que** la bague d'arrêt (21) munie du joint (26) du barrage anti-retour (10) est disposée de façon déplaçable axialement entre une première position, dans laquelle elle s'applique contre une bague de butée axiale (23) du barrage anti-retour (10) et empêche de cette manière un passage de polymères, de prépolymères et/ou de monomères liquides, et une deuxième position, dans laquelle elle est disposée à distance de la bague de butée (23) et permet de cette manière un passage de polymères, de prépolymères et/ou de monomères liquides.

11. Dispositif selon l'une quelconque des revendications 1 à 9, **caractérisé en ce qu'**une bague de butée (23) formant une butée pour la bague d'arrêt (21) munie du joint (26) du barrage anti-retour (10) est disposée de façon déplaçable axialement entre une première position, dans laquelle elle s'applique contre la bague d'arrêt (21) du barrage anti-retour (10) et empêche de cette manière un passage de polymères, de copolymères et/ou de monomères liquides, et une deuxième position, dans laquelle elle est disposée à distance de la bague d'arrêt (21) et permet de cette manière un passage de polymères, de copolymères et/ou de monomères liquides.

12. Dispositif selon la revendication 10 ou 11, **caractérisé en ce que** la bague d'arrêt (21) munie du joint (26) du barrage anti-retour (10) ou la bague de butée (23) est préchargée, en particulier élastiquement, en direction de sa première position, dans laquelle elle s'applique contre la bague de butée (23) ou contre la bague d'arrêt (21) du barrage anti-retour (10).

13. Dispositif selon l'une quelconque des revendications 1 à 12, **caractérisé en ce qu'**il est prévu, entre le barrage anti-retour (10) et l'ouverture de sortie de l'extrudeuse (2), une entrée (12) pour le dosage d'additifs, comme des catalyseurs, des activateurs ou analogues.

14. Barrage anti-retour à disposer dans la région de l'extrémité libre de la vis sans fin (5) d'une extrudeuse (2), en particulier d'un dispositif selon l'une quelconque des revendications 1 à 13, dans lequel le barrage anti-retour (10) présente au moins une bague d'arrêt (21) agissant contre une paroi périphérique extérieure de l'extrudeuse (2), qui comporte un joint (26) posé sur au moins une partie de sa périphérie extérieure, **caractérisé en ce que** le matériau d'étanchéité résistant à l'usure du joint (26) de la bague d'arrêt (21) est choisi dans le groupe des polyéthercétones (PEK) et leurs dérivés, des polyaryléthercétones (PAEK) et leurs dérivés, des polyoléfines polyhalogénées, des polyoléfines à haut poids moléculaire avec une masse molaire d'au moins 100 000 g/mole, et des polyamides (PA), y compris des copolymères et des mélanges de polymères avec les mêmes avec une dureté plus faible que le matériau de la paroi périphérique de l'extrudeuse (2).

15. Utilisation d'un dispositif selon l'une quelconque des revendications 1 à 13 pour la fabrication directe de pièces moulées en polymère, dans laquelle on fournit à l'extrudeuse (2), comme matière première, des prépolymères et/ou des monomères liquides, éventuellement en même temps que des polymères plastifiables et/ou en même temps que des matières de charge et/ou des fibres de renforcement, et on les transfère dans l'outil de moulage (4) et on les durcit.

16. Utilisation selon la revendication 15, **caractérisée en ce que** l'on prédispose une structure fibreuse dans l'outil de moulage avant le transfert du mélange de réaction dans celui-ci.

17. Utilisation selon la revendication 15 ou 16, **caractérisée en ce que** l'on ajoute à la matière première des catalyseurs et/ou des activateurs accélérant la prise et/ou on dose l'ajout de ces catalyseurs et/ou activateurs en aval du barrage anti-retour (10), avant que le mélange de réaction soit transféré dans l'outil de moulage (4) et durci.
